(19) Europäisches Patentamt
European Patent Office
Office européen des brevets

(11) **EP 4 576 562 A1**

(12) **EUROPÄISCHE PATENTANMELDUNG**

(43) Veröffentlichungstag:
25.06.2025 Patentblatt 2025/26

(21) Anmeldenummer: 23219087.6

(22) Anmeldetag: 21.12.2023

(51) Internationale Patentklassifikation (IPC):
*H02P 29/60* (2016.01) *H02P 21/00* (2016.01)

(52) Gemeinsame Patentklassifikation (CPC):
**H02P 29/60; H02P 21/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder:
• **Eftekhari, Maryam**
**86836 Untermeitingen (DE)**
• **Rehorik, Kilian**
**97082 Würzburg (DE)**
• **Schweren, Sebastian**
**86179 Augsburg-Hauntstetten (DE)**

(74) Vertreter: **Hilti Aktiengesellschaft**
**Corporate Intellectual Property**
**Feldkircherstrasse 100**
**Postfach 333**
**9494 Schaan (LI)**

(54) **VERFAHREN ZUM MODELLBASIERTEN BESTIMMEN EINER BETRIEBSTEMPERATUR BEI EINEM ELEKTROHANDWERKZEUG**

(57) Die Erfindung betrifft ein computerimplementiertes Verfahren zum modellbasierten Bestimmen einer aktuellen Betriebstemperatur eines in einem Elektrohandwerkzeug als Antriebseinheit vorgesehenen Elektromotors durch eine elektronische Steuereinheit auf Basis eines thermischen Netzwerkmodels, wobei zur Temperaturbestimmung bei einem als bürstenloser Gleichstrommotor ausgebildeten Elektromotor, der zur Nutzung des thermischen Netzwerkmodels erforderliche Parameter einer anfänglichen Temperatur der Statorwicklung anhand eines Wicklungswiderstands im Stillstand des Elektromotors bestimmt wird, welcher auf Basis der Spannungsgleichung eines Permanent-Synchronmotors mit innenliegenden Magneten ermittelt oder gemessen wird.

Fig. 1

EP 4 576 562 A1

## Beschreibung

Die vorliegende Erfindung betrifft ein computerimplementiertes Verfahren zum modellbasierten Bestimmen einer aktuellen Betriebstemperatur eines in einem Elektrohandwerkzeug als Antriebseinheit vorgesehenen Elektromotors durch eine elektronische Motorsteuerung auf Basis eines thermischen Netzwerkmodells, ein Elektrohandwerkzeug mit einem Elektromotor als Antriebseinheit sowie auch ein das Verfahren verkörperndes Computerprogramm, welches auf einer mikroprozessorgesteuerten Steuereinheit des Elektrohandwerkzeugs ausführbar ist.

Das Einsatzgebiet der Erfindung erstreckt sich vornehmlich auf Elektrohandwerkzeuge, wie beispielsweise Meißel- und Abbruchhämmer, Bohrhämmer, Bohrgeräte und dergleichen, bei denen mindestens ein Elektromotor als Antriebseinheit zum Einsatz kommt, welcher hinsichtlich seiner Betriebstemperatur überwacht wird.

Insbesondere Elektrohandwerkzeuge höherer Leistung bedürfen einer Überwachung der Betriebstemperatur ihres Elektromotors, um durch Überhitzung verursachte Verschleiß- oder Fehlerzustände zu vermeiden. Durch die Berücksichtigung des Kühlungsdesigns von Elektrohandwerkzeugen, insbesondere hinsichtlich der Anbringung eines Lüfters an eine Motorwelle, ist die direkte Beziehung zwischen dem hierdurch erzeugten Kühlluftstrom und der Motordrehzahl offensichtlich, was die Temperaturüberwachung des Elektromotors für neue Anwendungen attraktiver macht. Darüber hinaus ermöglichen Echtzeitinformationen über den thermischen Zustand des Elektromotors eine höhere Effizienz des Elektrohandwerkzeugs bei unterschiedlichen Umgebungsbedingungen.

Prinzipiell wurden bislang verschiedene Ansätze zur Überwachung des thermischen Zustands von Elektrohandwerkzeugen der hier interessierenden Art verfolgt. So garantiert bei Anwendungen mit konstanter Last eine entsprechende Motordimensionierung einen sicheren thermischen Zustand. Bei Anwendungen mit dynamischer Last und ohne die Möglichkeit einer thermischen Überwachung wurde bislang der Elektromotor jedoch hinsichtlich einer anzunehmenden maximalen Last überdimensioniert, um sicherzustellen, dass das Elektrohandwerkzeug immer unter einer vorgegebenen Temperaturgrenze arbeitet. Dies führt zu einem erhöhten technischen Aufwand des Antriebs sowie zu einem entsprechend hohen Gewicht des Elektrohandwerkzeugs.

Um dies zu vermeiden, ist bisher auch versucht worden, mithilfe von Temperatursensoren eine Leistungsregelung zu realisieren, um eine Überhitzung nicht überdimensionierter Elektromotoren zu vermeiden. Allerdings geht dies zu Lasten einer kontinuierlichen Leistungsabgabe und eines gestiegenen sensortechnischen Aufwands.

Die DE 10 2010 063 950 A1 schlägt demgegenüber eine sensorlose technische Lösung zur Schätzung der Betriebstemperatur vor, welche auf einer Bestimmung des Widerstands von Universalmotoren in Haushaltsgeräten während der Motorstillstandzeit und zur Neuberechnung der Betriebstemperatur aus dem ermittelten Widerstand basiert. Es erfolgt hier also eine Zustandsbeobachtung, welche auf der elektrischen Spannungsgleichung für Elektromaschinen basiert, um aus der Widerstandsänderung der Motorwicklung die Temperatur abzuleiten, also zu schätzen.

Neben einer solchen Zustandsbeobachtung zur sensorlosen Temperaturermittlung von Elektromaschinen besteht ein weiterer modellbasierter Ansatz auf einem hier interessierenden generischen Lumped Parameter Thermal Network (LPTN). Diese LPTN's können die tatsächlichen thermischen Eigenschaften eines Elektromotors beschreiben.

Aus der US 2012/0007532 A1 geht ein gattungsgemäßes Verfahren zum modellbasierten Bestimmen einer aktuellen Betriebstemperatur eines als Gleichstrommotor ausgebildeten Elektromotors auf Basis eines LPTN hervor. Die technische Lösung beinhaltet ein thermisches Laufzeitmodell, das die Temperaturen einzelner Komponenten eines Elektromotors bestimmt, um eine Leistungsbegrenzung nur dann durchzuführen, wenn dies hinsichtlich der thermischen Belastung notwendig ist. Das Leistungsbegrenzungssystem für einen vektorgesteuerten Gleichstrommotor enthält ein Drehmomentbefehlssystem zum Erzeugen eines Drehmomentbefehls. Ein Wärmeschutzsystem bestimmt eine Laufzeitschätzung für eine Temperatur einer elektromagnetischen Rotationskomponente des Elektromotors. Eine elektronische Steuereinheit ist derart konfiguriert, dass diese ein Motorsteuersignal für den vektorgesteuerten Gleichstrommotor in Reaktion auf den Drehmomentenbefehl erzeugt, wobei das Wärmeschutzsystem die Laufzeitschätzung in Reaktion auf ein thermisches Mehrknotenmodell des Elektromotors bestimmt. Die elektronische Steuereinheit begrenzt die Leistung des Elektromotors, um eine Komponententemperatur unterhalb ihrer kritischen Temperatur zu halten. Es erfolgt also eine Steuerung des Drehmomentbefehls basierend auf der per LPTN in Echtzeit ermittelten Motortemperatur.

Zur Lösung des Zustandsraums eines LPTN, ist jedoch eine geeignete Anfangsbedingung erforderlich, um die Konvergenz des Algorithmus zu beschleunigen.

Es ist daher die Aufgabe der vorliegenden Erfindung, ein Verfahren zum modellbasierten Bestimmen einer aktuellen Betriebstemperatur eines in einem Elektrohandwerkzeug als Antriebseinheit vorgesehenen bürstenlosen Gleichstrommotor als Elektromotor auf Basis eines thermischen Netzwerkmodells (LPTN) dahingehend weiter zu verbessern, dass mit einfachem technischen Aufwand sensorlos eine Anfangstemperatur der Motorwicklung zur Verwendung als Anfangsbedingung in einem LPTN für bürstenlose Gleichstrommotoren bestimmbar ist.

Offenbarung der Erfindung

Die Aufgabe wird ausgehend von einem computerimplementierten Verfahren gemäß dem Oberbegriff von Anspruch 1 in Verbindung mit dessen kennzeichnenden Merkmalen gelöst. Hinsichtlich eines dieses Verfahren anwendenden Elektrohandwerkzeugs wird auf Anspruch 5 verwiesen. Der Anspruch 10 gibt ein die erfindungsgemäßen Verfahrensschritte verkörperndes Computerprogramm an, das auf einer insoweit mikroprozessorgesteuerten Steuereinheit eines Elektrohandwerkzeugs ausführbar ist.

Die Erfindung schließt die verfahrenstechnische Lehre ein, dass zur Temperaturbestimmung bei einem als bürstenloser Gleichstrommotor ausgebildeten Elektromotor, der zur Nutzung des LPTN erforderliche Parameters einer anfänglichen Temperatur der Statorwicklung anhand eines Wicklungswiderstands im Stillstand des Elektromotors analytisch bestimmt wird, welcher auf Basis der Spannungsgleichung eines Permanent-Synchronmotors mit innenliegenden Magneten (IPMSM) ermittelt wird.

Der Vorteil der erfindungsgemäßen Lösung liegt insbesondere darin, dass bei der Anwendung eines thermischen Modells (LPTN) eine einfache analytische Methode zur Festlegung einer treffenden Anfangsbedingung genutzt wird, welche die Konvergenz des Algorithmus beschleunigt und die Auswirkungen von Fehlern beseitigt. Dieses Verfahren ist darüber hinaus recht robust gegenüber Produktionstoleranzen. Außerdem wirkt sich - wie nachfolgend anhand der Umformung der mathematischen Gleichungen gezeigt wird - der injizierte Strom nicht auf die Bewegung des Elektromotors aus.

Bei dem erfindungsgegenständlichen Verfahrensschritt einer Widerstandsschätzung wird mit anderen Worten der elektrische Widerstand der Motorwicklung des Stators bei Motorstillstand geschätzt und die Temperatur der Motorwicklung wird aus dem elektrischen Widerstand nach dem Einschalten des Elektromotors berechnet, um diese als Anfangsbedingung für das LPTN zu nutzen. Somit werden also beide analytischen Modellansätze synergetisch miteinander kombiniert.

Vorzugsweise wird bei der Widerstandsermittlung zur Schätzung der anfänglichen Wicklungstemperatur auf der Grundlage des Wicklungswiderstands jedes Mal nach dem Zurücksetzen des Elektrohandwerkzeugs ein bekannter Strom in die Statorwicklung des Gleichstrommotors eingespeist. Da der Strom und die Spannung über der Statorwicklung bekannt sind, kann hieraus der Wicklungswiderstand bestimmt werden. Die Temperatur der Statorwicklung ergibt sich dann aus dem so ermittelten Wicklungswiderstand, was nachfolgend anhand der formelmäßigen Zusammenhänge dargelegt wird.

Grundlage für die Ableitung der Messung ist die Spannungsgleichung eines IPMSM im rotororientierten dq-Bezugssystem:

$$\begin{bmatrix} u_d \\ u_q \end{bmatrix} = \begin{bmatrix} R_s & -\omega_{el}L_q \\ \omega_{el}L_d & R_s \end{bmatrix} \begin{bmatrix} i_d \\ i_q \end{bmatrix} + \begin{bmatrix} L_d & 0 \\ 0 & L_q \end{bmatrix} \frac{d}{dt} \begin{bmatrix} i_d \\ i_q \end{bmatrix} + \begin{bmatrix} 0 \\ \omega_{el}\Psi_{PM} \end{bmatrix} \tag{1}$$

Die eigentliche Messung wird zu Beginn des Arbeitszyklus durchgeführt, wenn der Elektromotor stillsteht, daher ist $\omega_{el} = 0$ und die Gleichung (1) kann reduziert werden auf:

$$\begin{bmatrix} u_d \\ u_q \end{bmatrix} = \begin{bmatrix} R_s & 0 \\ 0 & R_s \end{bmatrix} \begin{bmatrix} i_d \\ i_q \end{bmatrix} + \begin{bmatrix} L_d & 0 \\ 0 & L_q \end{bmatrix} \frac{d}{dt} \begin{bmatrix} i_d \\ i_q \end{bmatrix} \tag{2}$$

Um den induktiven Anteil der Spannung zu eliminieren, wird mithilfe der Stromregelung ein konstanter d-Strom eingestellt, um sicherzustellen, dass $\frac{d}{dt}i_d = 0$ .Wenn diese Bedingung erfüllt ist, wird die Gleichung (2) auf den Ohm'schen Anteil wie folgt reduziert:

$$\begin{bmatrix} u_d \\ u_q \end{bmatrix} = R_s \begin{bmatrix} i_d \\ i_q \end{bmatrix} \tag{3}$$

$$R_s = \frac{u_d}{i_d} \tag{4}$$

Indem für die Widerstandsmessung nur positiver d-Strom angelegt wird, kann sichergestellt werden, dass kein Drehmoment erzeugt wird und der Elektromotor während der Messung stillsteht. Aufgrund von Nichtlinearitäten bei der Spannungserzeugung ist die Referenzspannung $u_d^*$ des Reglers nicht gleich der tatsächlich angelegten d-Spannung $u_d$.

$$u_d^* \neq u_d \tag{5}$$

Da aber keine Phasenspannungsmessung in der elektronischen Steuereinheit vorhanden ist, steht nur die Referenzspannung $u_d^*$ für die Auswertung zur Verfügung. Die folgenden drei Effekte werden exemplarisch berücksichtigt: Ein Spannungsfehler, der durch die Totzeit des Umrichters verursacht wird; ein konstanter Spannungsabfall über einen MOSFET der Leistungsstufe; ein Spannungsabfall über die Motorverkabelung. Bei einer festen Rotorposition des Elektromotors und einem festen Stromwinkel können alle Spannungsfehler vorzugsweise als konstant angenommen werden. Beide Effekte werden zu einem Spannungsfehler $u_{err}$ kombiniert. Mit dieser Annahme kann die tatsächlich angelegte d-Spannung wie folgt ausgedrückt werden:

$$u_d = u_{err} + u_d^* \tag{6}$$

Der unbekannte Spannungsfehler kann neutralisiert werden, indem zwei unterschiedliche Messströme angelegt werden, nämlich $i_{d,1}$ und $i_{d,2}$. Wenn sich die angelegten Ströme im eingeschwungenen Zustand befinden, sind die Ausgangsspannungen der Spannungsregler $u_{d,1}^*$ und $u_{d,2}^*$ abtastbar. Mit diesen Messungen stehen zwei Gleichungen für die Auswertung zur Verfügung, nämlich:

$$R_s = \frac{u_{d,1}^* + u_{err}}{i_{d,1}} \tag{7}$$

$$R_s = \frac{u_{d,2}^* + u_{err}}{i_{d,2}} \tag{8}$$

Durch Lösen dieser beiden Gleichungen (7) und (8) für den Spannungsfehler, kann dieser eliminiert werden:

$$R_s \cdot i_{d,1} - u_{d,1}^* = u_{err} \tag{9}$$

$$R_s \cdot i_{d,2} - u_{d,2}^* = u_{err} \tag{10}$$

Der Ausdruck kann für den Statorwiderstand Rs wie folgt umgeformt werden:

$$R_s \cdot \left( i_{d,2} - i_{d,1} \right) = u_{d,2}^* - u_{d,1}^* \tag{11}$$

mit dem Endergebnis

$$R_s = \frac{u_{d,2}^* - u_{d,1}^*}{i_{d,2} - i_{d,1}} \tag{12}$$

Erfindungsgemäß wird mit anderen Worten also vor jedem Motorlauf der Widerstand der Statorwicklung im Stillstand auf diese Weise ermittelt. Daher kann die anfängliche Statortemperatur Ts anhand der Beziehung zwischen Widerstand und Temperatur gemäß folgender Gleichung bestimmt werden:

$$T_s = \left( 20^{\circ}\mathrm{C} + \frac{1}{\alpha_{20}} \right) \frac{R_s}{R_{s,20}} - \frac{1}{\alpha_{20}} \tag{13}$$

wobei $R_{s,20}$ und $\alpha_{20}$ der Statorwiderstand Rs und der Widerstandstemperaturkoeffizient der Statorwicklung bei einer Temperatur von 20°C sind.

Indem der Statorwiderstand Rs einmalig bei einer bestimmten Temperatur gemessen wird, vorzugsweise am Ende der Produktionslinie des Elektromotors, also unmittelbar nach dessen Herstellung im Rahmen einer anschließenden Funktionsprüfung, und in einem Speicher der elektronischen Steuereinheit als Startparameter zur späteren Bestimmung der Temperatur Ts der Statorwicklung hinterlegt wird, kann diese anhand des Statorwiderstands Rs geschätzt werden.

Vorzugsweise ist das in die erfindungsgemäße Lösung implementierte thermische Netzwerkmodell (LPTN) derart ausgebildet, dass die Temperatur der Knoten des Modells der durchschnittlichen Temperatur mindestens einer Hauptkomponente des Elektromotors, vorzugsweise der Temperatur der Statorwicklung, entspricht. Darüber hinaus können auch andere Hauptkomponenten des Motors der Temperaturermittlung zugrunde liegen, beispielsweise auch der Rotor oder eine Permanentmagneteinheit. Ziel ist ein thermisches Netzwerkmodell, das mit minimalem Rechenaufwand die Betriebstemperatur $T_M$ berechnet.

Die erfindungsgemäße Lösung stellt zusätzlich zu den Eingangsdaten Motorstrom $I_M$ sowie Motordrehzahl $n_M$ eine Anfangsbedingung in Form der geschätzten anfänglichen Temperatur Ts bereit, um möglichst kurzzeitig zu der realen, aktuellen Betriebstemperatur $T_M$ zu konvergieren. Hierdurch wird gegenüber dem Stand der Technik eine um das Dreifache verkürzte thermische Zeitkonstante des Elektromotors erzielt.

Der LPTN-Ansatz basiert auf der Verwendung von Motorverlustparametern, beispielsweise Kupferverluste der Statorwicklung und/oder Eisenverluste eines Eisenkerns für jeden einzelnen Arbeitspunkt des Elektromotors, um die Temperatur $T_M$ der Statorwicklung zu berechnen.

Dadurch, dass diese Verluste von der jeweiligen Stromstärke und Motordrehzahl abhängig sind, werden Look-up Tabellen oder Gleichungen in den Steuereinheiten verwendet, um aus dem Effektivstrom des Motors und der Motordrehzahl die tatsächlichen Verluste zu bestimmen.

Anschließend werden die berechneten Verluste in das LPTN-Modell eingesetzt, um an bestimmten Motorkomponenten (auch als Knoten des LPTN-Modells bezeichnet) die Temperatur zu ermitteln.

Das heißt, der ermittelte Wert ist die Temperatur an der Statorwicklung oder an jeder anderen als Modell erzeugten Komponenten des Elektromotors.

Das LPTN-Modell ist als Routine (oder auch Programm) auf dem Mikrocontroller der Steuereinheit hinterlegt.

Die Bestimmungsrate (auch als Taktrate oder Calling-rate bezeichnet) des LPTN-Modells hängt dabei von der thermischen Zeitkonstante des Elektromotors ab.

Um effektiv dem thermischen Verhalten (d.h. der Wärmeentwicklung) des Elektromotors zu folgen, sollte das LPTN-Modell zehn Mal schneller agieren als die thermische Zeitkonstante des Elektromotors. Das LPTN-Modell kann damit für ein bis 15 Komponenten eine Taktrate (d.h. Calling rate) von 50 bis 2000 ms, und vorzugsweise 1000 ms für zehn Komponenten haben.

Es ist dabei auch möglich, dass das LPTN-Modell ohne anfänglichen Temperaturwert verwendet wird.

Mit Hilfe einer linear rückgekoppelten Regelung kann die Motorleistung entsprechend einem Vergleich zwischen eines aktuell ermittelten Temperaturwertes und bereits erfassten Temperaturwerten reduziert werden. Eine Reduzierung der Motorleistung erfolgt dabei entsprechend einem erfassten Temperaturanstieg. Wenn ein Temperaturwert einen vorbestimmten Schwellwert erreicht hat, wird die Motorleistung auf null gesetzt bzw. die Motordrehzahl auf null gesetzt.

Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:

Figur 1    ein schematisches Blockschaltbild einer Elektromotoranordnung für ein Elektrohandwerkzeug mit Steuereinheit,

Figur 2    ein Flussdiagramm zur Veranschaulichung der erfindungsgemäßen Verfahrensschritte, und

Figur 3    eine grafische Darstellung von Motorstrom und Motorspannung über die Zeit für die Ermittlung des Statorwiderstands des Elektromotors.

**Ausführungsbeispiel**

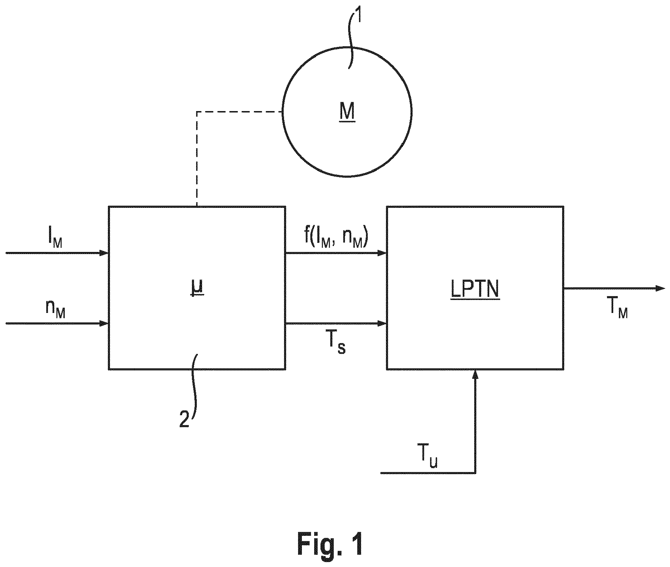

Gemäß Figur 1 umfasst ein - nicht weiter dargestelltes - Elektrohandwerkzeug einen Elektromotor 1 als Antriebseinheit, der von einer mikroprozessorgesteuerten Steuereinheit 2 angesteuert wird.

Bei dem Elektrowerkzeug kann es sich beispielsweise um einen Bohrhammer, Schrauber, Schleifgerät, Säge oder dergleichen handeln.

Der Steuereinheit 2 ist ein thermisches Netzwerkmodell LPTN zur Bestimmung einer aktuellen Betriebstemperatur $T_M$ des Elektromotors 1 zwecks an sich bekannter Leistungsregelung zugeordnet. Beim vorliegenden Ausführungsbeispiel entspricht die Temperatur der Knoten des LPTN-Modells der durchschnittlichen Temperatur der Statorwicklung des Elektromotors 1. Als Eingangswerte für das LPTN-Modell werden diesem der aktuelle Motorstrom $I_M$ und die Motordrehzahl $n_M$ zugeführt, woraus die Steuereinheit 2 die Motorverlustparameter ermittelt und an das LPTN-Modell weitergibt. Zusätzlich wird als weiterer Parameter eine anfängliche Temperatur Ts an das LPTN-Modell als Anfangsbedingung für den Algorithmus weitergegeben, damit dieser möglichst kurzzeitig zu den realen Temperaturwerten konvergiert, also die geschätzte Betriebstemperatur $T_M$ des Elektromotors. Als weiteren Eingangswert für das LPTN-Modell wird die Umgebungstemperatur Tu verwertet.

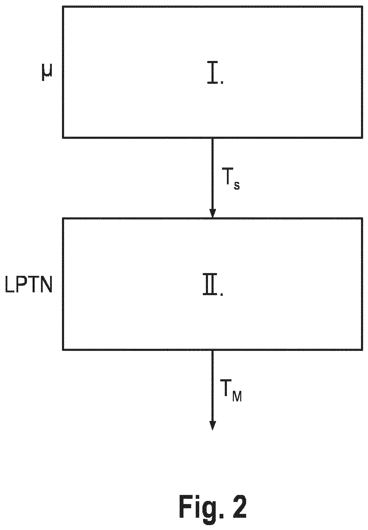

Gemäß Figur 2 erfolgt das modellbasierte Bestimmen einer aktuellen Betriebstemperatur $T_M$ anhand der vorstehend beschriebenen Anordnung, indem in einem ersten Schritt die anfängliche Temperatur Ts einer Hauptmotorkomponente, vorzugsweise Statorwicklung, anhand deren Wicklungswiderstand Rs im Stillstand des Elektromotors bestimmt wird. Dies erfolgt auf Basis einer Zustandsbeobachtung.

Anschließend wird in einem weiteren Schritt auf Basis eines LPTN-Modells die aktuelle Betriebstemperatur $T_M$ des Elektromotors zwecks Leistungsregelung bestimmt. Damit vereint die erfindungsgemäße Lösung also die Anwendung zweier analytischer thermischer Modelle zur Temperaturbestimmung.

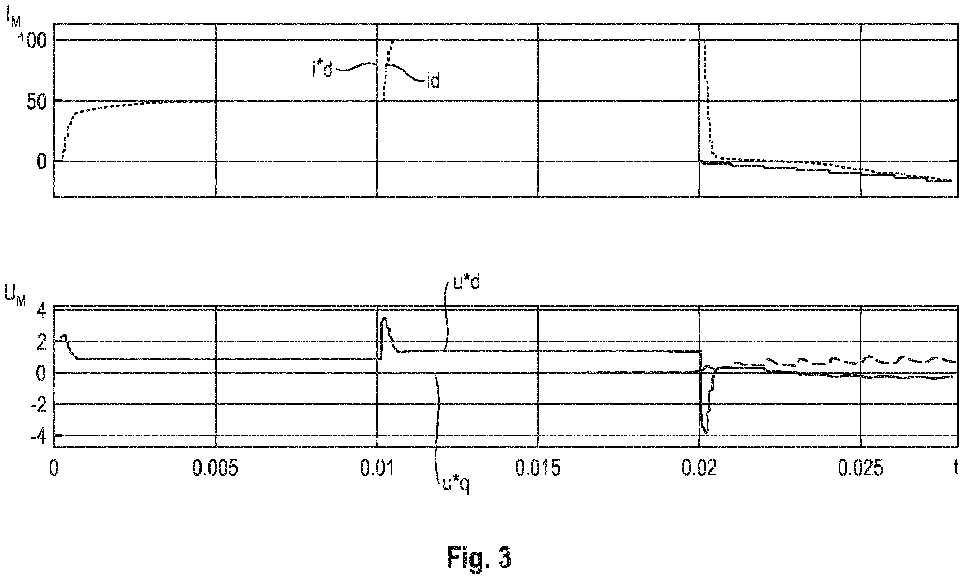

Der in der Figur 3 veranschaulichte zeitliche Verlauf von Variablen der zum Wicklungswiderstand Rs des Stators umgeformten Spannungsgleichung (12), und zwar hinsichtlich der Motorspannung $U_M$ die Variablen $u^*_d$ und $u^*_q$ und hinsichtlich des Motorstroms $I_M$ die Variablen $i^*_d$ und $i_d$.

**Bezugszeichenliste**

1 Elektromotor (bürstenloser Gleichstrommotor)
2 elektronische Steuereinheit

LPTN     thermisches Netzwerkmodell
IPMSM    Permanent-Synchronmotor mit innenliegenden Magneten
$T_M$     aktuelle Betriebstemperatur
$T_s$     anfängliche Temperatur
Tu     Umgebungstemperatur
Rs     Wicklungswiderstand
$I_M$     Motorstrom
$n_M$     Motordrehzahl

**Patentansprüche**

**1.** Computerimplementiertes Verfahren zum modellbasierten Bestimmen einer aktuellen Betriebstemperatur ($T_M$) eines in einem Elektrohandwerkzeug als Antriebseinheit vorgesehenen Elektromotors (1) durch eine elektronische Steuereinheit (2) auf Basis eines thermischen Netzwerkmodels (LPTN),
**dadurch gekennzeichnet, dass** zur Temperaturbestimmung bei einem als bürstenloser Gleichstrommotor ausgebildeten Elektromotor (1), der zur Nutzung des thermischen Netzwerkmodels (LPTN) erforderliche Parameter einer anfänglichen Temperatur ($T_s$) der Statorwicklung anhand eines Wicklungswiderstands (Rs) im Stillstand des Elektromotors (1) bestimmt wird, welcher auf Basis der Spannungsgleichung eines Permanent-Synchronmotors mit innenliegenden Magneten (IPMSM) ermittelt wird.

**2.** Verfahren nach Anspruch 1,
**dadurch gekennzeichnet, dass** bei der Spannungsgleichung ein rotororientiertes dq-Bezugssystem herangezogen wird.

**3.** Verfahren nach Anspruch 1,
**dadurch gekennzeichnet, dass** zur Umformung der Spannungsgleichung zur Ermittlung des Widerstands der Statorwicklung für eine feste Rotorposition und Stromwinkel alle Spannungsfehler als konstant angenommen werden.

**4.** Verfahren nach Anspruch 1,
**dadurch gekennzeichnet, dass** der motorindividuelle Wicklungswiderstand (Rs) unmittelbar nach der Herstellung des Elektromotors (1) bei einer bestimmten Umgebungstemperatur (Tu) gemessen wird, um den Messwert in der elektronischen Steuereinheit (2) als Startparameter zur späteren Bestimmung der Temperatur ($T_s$) der Statorwicklung abzuspeichern.

**5.** Elektrohandwerkzeug mit mindestens einem Elektromotor (1) als Antriebseinheit, der von einer Steuereinheit (2) angesteuert wird, welche ein Verfahren zum Bestimmen einer aktuellen Betriebstemperatur ($T_M$) auf Basis eines thermischen Netzwerkmodels (LPTN) nach einem der vorstehenden Ansprüche 1 bis 4 durchführt.

6. Elektrohandwerkzeug nach Anspruch 5,
**dadurch gekennzeichnet, dass** das thermische Netzwerkmodel (LPTN) derart ausgebildet ist, dass die Temperatur der Knoten des Modells der durchschnittlichen Temperatur mindestens einer Hauptkomponente des Elektromotors (1) entspricht, welche ausgewählt sind aus einer Komponentengruppe, umfassend: Statorwicklung, Rotor, Permanentmagneteinheit.

7. Elektrohandwerkzeug nach Anspruch 5,
**dadurch gekennzeichnet, dass** das thermische Netzwerkmodels (LPTN) mit Zustandsraumgleichungen dargestellt ist, deren Parameter aus Geometrie- und Materialdaten einer der Hauptkomponenten des Elektromotors (1) besteht.

8. Elektrohandwerkzeug nach Anspruch 7,
**dadurch gekennzeichnet, dass** als Eingangswerte für das thermische Netzwerkmodels (LPTN) Motorverlustparameter ($f(I_M, n_M)$) und die Umgebungstemperatur (Tu) und als Ausgangswerte die Betriebstemperatur ($T_M$) mindestens einer der Hauptkomponenten definiert ist.

9. Elektrohandwerkzeug nach Anspruch 7,
**dadurch gekennzeichnet, dass** als Eingangswerte für das thermische Netzwerkmodels (LPTN) wenigstens ein Motordrehzahlwert definiert ist.

10. Elektrohandwerkzeug nach Anspruch 8,
**dadurch gekennzeichnet, dass** die Ermittlung der Motorverlustparameter ($f(I_M, n_M)$) auf Basis des Motorstroms ($I_M$) und der Motordrehzahl ($n_M$) des Elektromotors (1) erfolgt.

11. Computerprogramm, umfassend Befehle, die bei der Ausführung des Programms durch eine Steuereinheit (2) eines Elektrohandwerkzeugs, diese veranlassen, das computerimplementierte Verfahren nach einem der vorstehenden Ansprüche 1 bis 4 auszuführen.

Fig. 1

μ

I.

$T_s$

LPTN

II.

$T_M$

**Fig. 2**

Fig. 3

Europäisches Patentamt

European Patent Office

Office européen des brevets

## EUROPÄISCHER RECHERCHENBERICHT

**Nummer der Anmeldung**

EP 23 21 9087

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2018 213370 A1 (BOSCH GMBH ROBERT [DE]) 13. Februar 2020 (2020-02-13) <br> * Absätze [0008], [0012], [0023] * <br> * Absätze [0021], [0030] * <br> * Absätze [0007], [0011] * <br> * Absätze [0013], [0014], [0035] * <br> ----- | 1-11 | INV. <br> H02P29/60 <br> H02P21/00 |
| Y | CN 106 208 878 A (UNIV SHANGHAI JIAOTONG) 7. Dezember 2016 (2016-12-07) <br> * 6. Absatz unter Summary of the invention * <br> * Gleichungen (1), (2) und (3) * <br> * Absätze [0046] - [0050] * <br> * 2. Absatz unter Detailed description of the invention * <br> * Abbildung 2 * <br> ----- | 1-5,11 | |
| Y | EP 3 323 562 A1 (HILTI AG [LI]) 23. Mai 2018 (2018-05-23) <br> * Absätze [0004], [0005] * <br> * letzter Abschnit des Absatzes 0004; Abbildung 1 * <br> ----- | 1,5 | |
| Y | DE 10 2021 208167 A1 (BOSCH GMBH ROBERT [DE]) 2. Februar 2023 (2023-02-02) <br> * Absätze [0016], [0024], [0045] * <br> ----- | 6 | RECHERCHIERTE SACHGEBIETE (IPC) <br><br> H02P |
| Y | DE 10 2020 111853 A1 (VALEO SIEMENS EAUTOMOTIVE GERMANY GMBH [DE]) 4. November 2021 (2021-11-04) <br> * Absatz [0017] * <br> ----- | 6 | |
| Y | CN 114 465 537 A (BEIJING NATIONAL NEW ENERGY AUTOMOBILE TECH INNOVATION CENTER LIMITED) 10. Mai 2022 (2022-05-10) <br> * Absatz [0194] * <br> ----- <br><br> -/-- | 7 | |

Der vorliegende Recherchenbericht wurde für alle Patentansprüche erstellt

| Recherchenort | Abschlußdatum der Recherche | Prüfer |
|---|---|---|
| München | 7. Juni 2024 | Roider, Anton |

EPO FORM 1503 03.82 (P04C03)

Europäisches Patentamt
European Patent Office
Office européen des brevets

**EUROPÄISCHER RECHERCHENBERICHT**

Nummer der Anmeldung

EP 23 21 9087

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WANG PENGYUAN ET AL: "Physics-Informed Machine Learning Based Permanent Magnet Synchronous Motor Temperature Estimation", 2023 9TH INTERNATIONAL CONFERENCE ON MECHANICAL AND ELECTRONICS ENGINEERING (ICMEE), IEEE, 17. November 2023 (2023-11-17), Seiten 582-587, XP034603630, DOI: 10.1109/ICMEE59781.2023.10525605 [gefunden am 2024-05-14] * Introduction * ----- | 7 | |
| Y | LI ZE ET AL: "Dual DC current injection-based stator winding temperature tracking for dual three-phase permanent magnet synchronous machine using Kalman filter", IET ELECTRIC POWER APPLICATIONS, IET, UK, Bd. 13, Nr. 11, 1. November 2019 (2019-11-01), Seiten 1726-1733, XP006086401, ISSN: 1751-8660, DOI: 10.1049/IET-EPA.2019.0049 * Brückenabsatz der Seiten 1729 und 1730 (links unten) * ----- | 7 | |
| Y | CN 112 242 803 B (SHANGHAI AUTOMOBILE GEAR WORKS) 3. Juni 2022 (2022-06-03) * step 9 * ----- | 7 | |
| Y | DE 10 2007 030633 B4 (SEIFERT DIETER [DE]) 27. November 2014 (2014-11-27) * Absatz [0010] * * Abbildung 3 * ----- | 8,9 | |
| | | -/-- | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 7. Juni 2024 | Roider, Anton |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

Europäisches
Patentamt

European
Patent Office

Office européen
des brevets

**EUROPÄISCHER RECHERCHENBERICHT**

**Nummer der Anmeldung**

EP 23 21 9087

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2005 004862 A1 (SIEMENS AG [DE]) 10. August 2006 (2006-08-10) * Absatz [0024] * * Abbildung 2 * ----- | 10 | |
| A | DE 11 2021 004269 T5 (FANUC CORP [JP]) 12. Oktober 2023 (2023-10-12) * das ganze Dokument * ----- | 1-11 | |
| A,D | DE 10 2010 063950 A1 (BSH BOSCH SIEMENS HAUSGERAETE [DE]) 28. Juni 2012 (2012-06-28) * Absätze [0008], [0009], [0012] - [0016], [0020] * * Absätze [0028], [0031], [0033], [0036] * ----- | 1,5 | |
| A,D | US 2012/007532 A1 (BAGLINO ANDREW DAVID [US] ET AL) 12. Januar 2012 (2012-01-12) * Absatz [0042] * * Abbildung 2 * ----- | 1,5 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 7. Juni 2024 | Roider, Anton |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 23 21 9087

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-06-2024

| Im Recherchenbericht angeführtes Patentdokument | Datum der Veröffentlichung | Mitglied(er) der Patentfamilie | Datum der Veröffentlichung |
|---|---|---|---|
| DE 102018213370 A1 | 13-02-2020 | KEINE | |
| CN 106208878 A | 07-12-2016 | KEINE | |
| EP 3323562 A1 | 23-05-2018 | EP 3323562 A1 | 23-05-2018 |
| | | EP 3541576 A1 | 25-09-2019 |
| | | US 2019366525 A1 | 05-12-2019 |
| | | WO 2018091414 A1 | 24-05-2018 |
| DE 102021208167 A1 | 02-02-2023 | DE 102021208167 A1 | 02-02-2023 |
| | | WO 2023006296 A1 | 02-02-2023 |
| DE 102020111853 A1 | 04-11-2021 | KEINE | |
| CN 114465537 A | 10-05-2022 | KEINE | |
| CN 112242803 B | 03-06-2022 | KEINE | |
| DE 102007030633 B4 | 27-11-2014 | KEINE | |
| DE 102005004862 A1 | 10-08-2006 | DE 102005004862 A1 | 10-08-2006 |
| | | JP 2008528901 A | 31-07-2008 |
| | | US 2008094231 A1 | 24-04-2008 |
| | | WO 2006082190 A1 | 10-08-2006 |
| DE 112021004269 T5 | 12-10-2023 | CN 116349130 A | 27-06-2023 |
| | | DE 112021004269 T5 | 12-10-2023 |
| | | JP 7492022 B2 | 28-05-2024 |
| | | JP WO2022085543 A1 | 28-04-2022 |
| | | US 2024014765 A1 | 11-01-2024 |
| | | WO 2022085543 A1 | 28-04-2022 |
| DE 102010063950 A1 | 28-06-2012 | KEINE | |
| US 2012007532 A1 | 12-01-2012 | US 2012007532 A1 | 12-01-2012 |
| | | WO 2012006605 A2 | 12-01-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010063950 A1
- US 20120007532 A1